# DEMANDE DE BREVET EUROPEEN

(11) **EP 2 034 213 A1**
(43) Date de publication de la demande: **11.03.2009**
(21) Numéro de dépôt: 07115961.0
(22) Date de dépôt: 07.09.2007
(51) Int. Cl.: F16F 15/315

(54) **Palier tournant pour un tambour d'un accumulateur d'énergie cinétique**

(71) Demandeur: Euro-Diesel S.A., 4460 Grace-Hollogne (BE)
(72) Inventeur: Wyckmans, G. EURO-DIESEL S.A., 4460, Grace-Hollogne (BE)
(74) Mandataire: Quintelier, Claude

(57) **Abrégé**

Palier tournant pour un tambour d'un accumulateur d'énergie cinétique, lequel palier comporte une ouverture centrale, agencée pour recevoir un axe de rotation du tambour, lequel palier comporte un premier (2) et un deuxième (3) anneaux montés de façon concentrique et à distance l'un par rapport à l'autre, ladite ouverture centrale étant située sur le premier anneau, le premier et le deuxième anneaux étant reliés entre eux à l'aide d'un jeu de bras (5) qui s'étendent dans un espace situé entre le premier (2) et le deuxième (3) anneaux, chaque bras dudit jeu étant agencé pour permettre un déplacement angulaire lors d'une rotation du tambour, de telle façon à permettre un élargissement du rayon du deuxième anneau.

## Description

La présente invention concerne un palier tournant pour un tambour d'un accumulateur d'énergie cinétique, lequel palier comporte une ouverture centrale, agencée pour recevoir un axe de rotation du tambour.

Les accumulateurs d'énergie cinétique sont généralement connus et sont en outre commercialisés par la demanderesse. Ces accumulateurs ont pour fonction d'assurer une alimentation continue en énergie électrique dans des endroits comme par exemple des hôpitaux et des centrales de gestion de banques où une interruption de l'alimentation en courant électrique pourrait avoir des sérieuses conséquences. L'accumulateur d'énergie cinétique est couplé à un générateur synchrone, lui-même couplé à un moteur. L'accumulateur restitue son énergie le temps que le moteur démarre. L'accumulateur d'énergie cinétique étant généralement constitué d'un tambour tournant à haute vitesse et d'un axe principal supportant un rotor muni de bobines, qui moyennant leur alimentation permettent un couplage électromagnétique de l'axe principal au tambour. Dans ces systèmes dynamiques, le tambour est généralement supporté par des paliers tournants équipés de roulements. Ces roulements assurent la liaison entre les pièces tournantes de, soit l'axe principal du système, soit des paliers fixes.

Le problème des paliers connus est que les exigences imposées dans les applications en continu requièrent que les roulements présentent une durée de vie et une fiabilité très importantes car leur remplacement entraîne généralement l'arrêt du système et par conséquent un risque important en cas de coupure du réseau. De plus, ces roulements sont continuellement sollicités puisqu'ils supportent l'accumulateur d'énergie qui doit à tout instant être prêt et par conséquent toujours tourner à sa vitesse nominale.

Afin de garantir une durée de vie et une fiabilité des roulements maximales, ceux-ci doivent être non seulement sélectionnés avec soin mais également installés en respectant des tolérances dimensionnelles exigeantes. En effet, il est bien connu des fabricants de roulements que la durée de vie et la fiabilité d'un roulement sont fortement influencées non seulement par la charge, la vitesse, le graissage, la température, mais également par l'ajustement des jeux. En conséquence, il est primordial que les pièces à assembler soient non seulement usinées en respectant des tolérances exigeantes mais également que ces dimensions ne soient pas modifiées lors du fonctionnement de la machine. En particulier, il est primordial que les forces centrifuges exercées par le tambour en rotation ne déforment pas les paliers en rotation de manière à modifier l'ajustement des jeux.

L'invention a pour but de réaliser un palier tournant ayant une grande fiabilité et une longue durée de vie afin de limiter au maximum de devoir remplacer les paliers.

A cette fin, un palier tournant suivant l'invention est caractérisé en ce que le palier comporte un premier et un deuxième anneaux montés de façon concentrique et à distance l'un par rapport à l'autre, ladite ouverture centrale étant située sur le premier anneau, le premier et le deuxième anneaux étant reliés entre eux à l'aide d'un jeu de bras qui s'étend dans un espace situé entre le premier et le deuxième anneaux, chaque bras dudit jeu étant agencé pour permettre un déplacement angulaire lors d'une rotation du tambour, de telle façon à permettre un élargissement du rayon du deuxième anneau. Le fait que chaque bras est agencé pour permettre un déplacement angulaire lors d'une rotation du tambour va permettre au deuxième anneau, qui supporte le tambour, à pouvoir suivre l'augmentation du périmètre du tambour, elle même induite par la force centrifuge que subit le tambour en rotation. Le déplacement n'aura pas d'effet direct sur le premier anneau, qui reçoit l'axe du tambour et ainsi la force centrifuge n'induit pas une déformation du premier anneau, ni ne modifiera le jeu au niveau des logements des roulements. Grâce au déplacement angulaire des bras, le premier anneau est nettement moins soumis à des forces radiales et ses dimensions ne se modifient pas.

Une première forme de réalisation préférentielle d'un palier tournant suivant l'invention est caractérisé en ce qu'un évidement est chaque fois prévu entre deux bras successifs dudit jeu de bras. La présence de l'évidement permet aux bras d'avoir suffisamment de débattement et réduit le poids du palier sans affecter sa fiabilité.

Une deuxième forme de réalisation préférentielle d'un palier tournant suivant l'invention est caractérisée en ce que chaque bras dudit jeu de bras est placé tangentiellement par rapport à une circonférence du premier anneau. Le placement tangentiel permet une large surface de contact entre le bras et le premier anneau, ce qui permet à son tour une liaison fiable. De plus, il permet une large souplesse dans le déplacement du bras lors de la rotation du tambour car le placement tangentielle s'inscrit parfaitement dans la rotation du palier.

Une troisième forme de réalisation préférentielle d'un palier tournant suivant l'invention est caractérisée en ce que chaque bras dudit jeu de bras est relié à au moins un des anneaux à l'aide d'une rotule. L'usage de rotules permet une forme de réalisation simple.

Une quatrième forme de réalisation préférentielle d'un palier tournant suivant l'invention est caractérisée en ce que chaque bras dudit jeu de bras est formé par un élément élastique. L'usage d'élément élastique permet une certaine flexibilité de montage des anneaux.

De préférence le deuxième anneau est composé d'un ensemble de sections pouvant coulisser l'une par rapport à l'autre. Ceci permet de faire varier le diamètre du deuxième anneau sans imposer trop de contraintes au matériau.

L'invention concerne également un accumulateur d'énergie cinétique pourvu d'un palier tournant suivant l'invention.

L'invention sera maintenant décrite plus en détails à l'aide des dessins qui illustrent des formes de réalisation préférentielles de paliers tournant suivant l'invention. Dans les dessins :
les figures 1 et 2 illustrent une forme de réalisation suivant laquelle les bras sont tangentiels au premier anneau;
la figure 3 illustre une forme de réalisation suivant laquelle les bras sont placés sous un angle par rapport au premier anneau;
la figure 4 illustre une forme de réalisation suivant laquelle les bras sont reliés aux anneaux à l'aide de rotules;
la figure 5 illustre une forme de réalisation suivant laquelle le deuxième anneau est composé d'un ensemble de sections;
la figure 6 illustre une forme de réalisation suivant laquelle les bras possèdent un profil réduisant les contraintes appliquées sur l'anneau; et
la figure 7 illustre l'élargissement du rayon du deuxième anneau.

Dans les dessins une même référence a été attribuée à un même élément ou à un élément analogue.

Le palier tournant 1, illustré dans les dessins est destiné à porter un tambour d'un accumulateur d'énergie cinétique. Un axe (non illustré) de rotation du tambour (également non illustré) est placé dans une ouverture centrale 4 du palier tournant 1. Le tambour est ainsi supporté lors de sa rotation et il est maintenu centré sur l'axe.

Le palier tournant 1 comporte un premier 2 et un deuxième 3 anneau montés de façon concentrique et à distance l'un par rapport à l'autre. L'ouverture centrale 4 est située sur le premier anneau 2, qui possède un rayon r1, qui est inférieur au rayon r2 du deuxième anneau. Le premier 2 et le deuxième 3 anneaux sont reliés entre eux à l'aide d'un jeu de bras 5, qui s'étendent dans un espace situé entre le premier et le deuxième anneau. Des évidements 6 sont de préférence chaque fois prévus entre deux bras 5 successifs. Chaque bras du jeu de bras est agencé pour permettre un déplacement angulaire du bras lors de la rotation du tambour, de telle façon à permettre un élargissement du rayon du deuxième anneau.

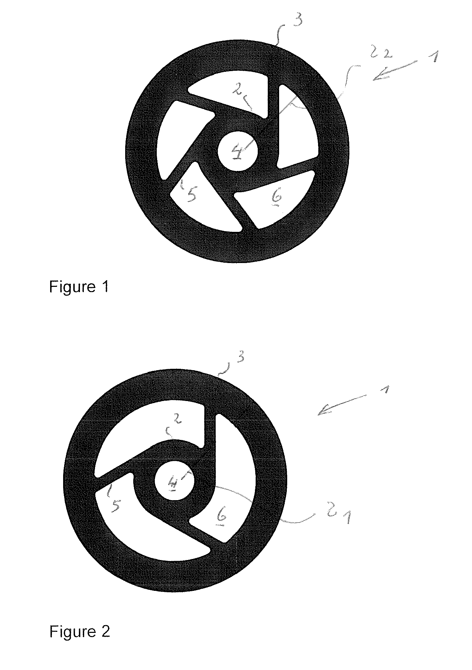

Afin de permettre cet élargissement du rayon du deuxième anneau, les bras peuvent être configurés de différentes façons ou être fixes de différentes façons aux anneaux. Ainsi, dans la forme de réalisation illustrée aux figures 1 et 2, chaque bras 5 est placé tangentiellement par rapport à la circonférence du premier anneau. Les bras sont solidaires du premier et du deuxième anneau. Le diamètre de l'ouverture centrale 4 est dimensionné de façon à garantir un jeu optimal pour le roulement. La dimension du deuxième anneau correspond à celle du tambour à supporter. Le nombre de bras est en fonction de la dimension des bras et du poids du tambour, ainsi que des contraintes imposées au tambour. Dans l'exemple de la figure 1, le jeu comporte cinq bras alors que dans l'exemple de la figure 2, le jeu comporte trois bras. La section des bras est déterminée en fonction du nombre de bras et des contraintes maximales admissibles pour le matériau dont est constitué le palier tournant. De préférence, des congés de raccordement sont prévus de manière à réduire les contraintes au niveau du raccordement entre les bras et les anneaux. En effet, les contraintes doivent être largement inférieures aux valeurs de rupture du matériau dont le palier est constitué.

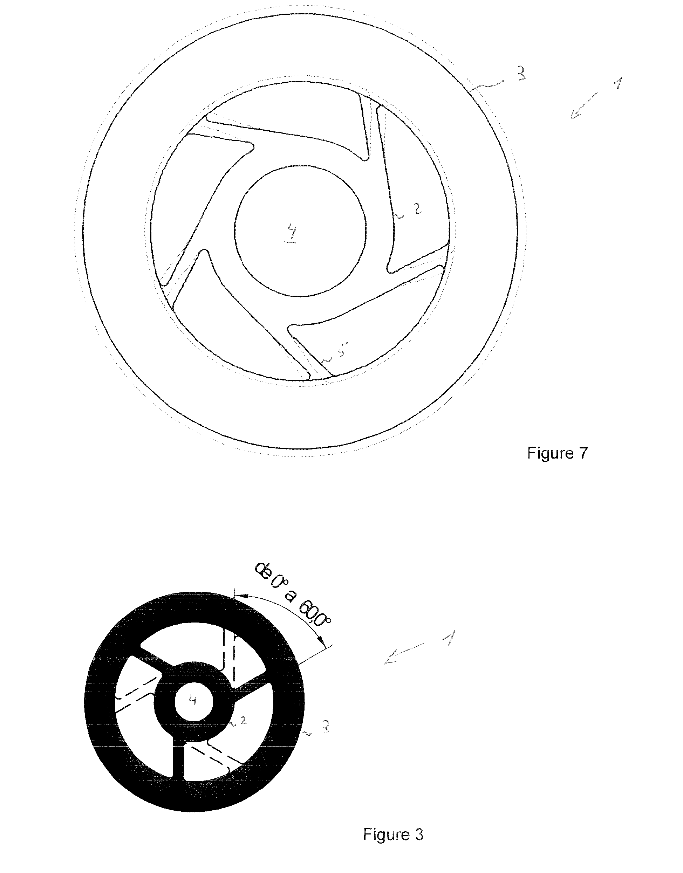

La forme de réalisation du palier tournant suivant l'invention illustrée à la figure 3 se distingue de celle illustrée aux figures 1 et 2 par le fait que les bras sont placés sur le premier anneau, de façon à former un angle α situé entre 0° et 60° par rapport à la circonférence du premier anneau 2. Cette forme de réalisation offre l'avantage d'être plus facile à usiner.

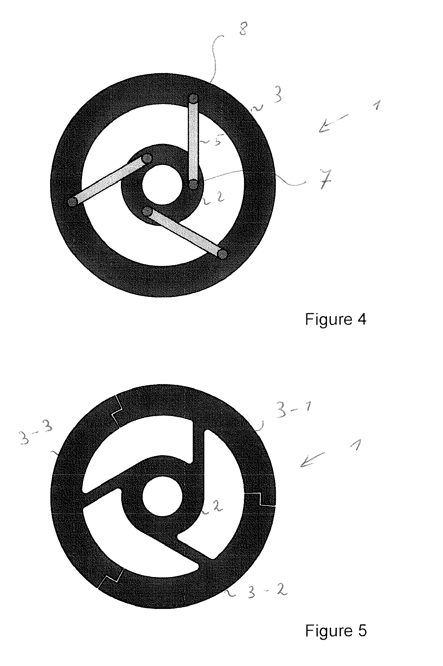

La forme de réalisation du palier tournant suivant l'invention et illustrée à la figure 4 se distingue de celle illustrée aux figures précédentes par le fait que les bras sont reliés aux anneaux à l'aide de rotules 7 et 8. Ceci offre l'avantage de pouvoir fabriquer le premier et deuxième anneau indépendamment l'un de l'autre, ce qui permet une plus grande variété de combinaisons de diamètre des anneaux. En effet, il est ainsi possible d'avoir un premier, respectivement un deuxième ensemble de premiers respectivement de deuxièmes anneaux de diamètres différents et de les combiner entre eux pour obtenir le diamètre voulu du palier.

II est également possible d'envisager une solution hybride entre les formes de réalisation illustrées aux figures 1 à 4. Ainsi, les bras 5 pourraient être placés tangentiellement par rapport à la circonférence du premier anneau 2 et être reliés à l'aide de rotules 8 au deuxième anneau.

Dans la forme de réalisation illustrée à la figure 5, le deuxième anneau 3 est composé d'un ensemble de sections (3-1, 3-2, 3-3) pouvant coulisser l'une par rapport à l'autre. A cette fin, le deuxième anneau est sectionné afin de permettre au tambour de se dilater lors de sa rotation sans induire d'effort sur l'anneau externe. Les sections peuvent se déplacer indépendamment l'une de l'autre. Dans l'exemple illustré à la figure 5, chaque section est pourvue à ses extrémités d'un profil permettant d'enjamber les sections successives entre elles. Le profil utilisé dans l'exemple de la figure 5 est un profil en escalier. Ainsi, les sections peuvent coulisser l'une par rapport à l'autre grâce aux épaulements obtenus par le profil en escalier.

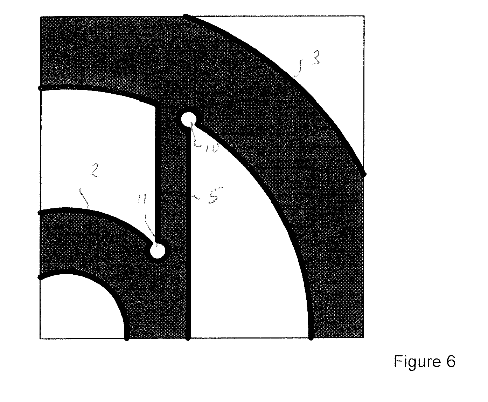

Dans la forme de réalisation illustrée à la figure 6, chaque bras 5 possède au niveau de son raccordement avec l'anneau 2, 3 un profil 10, 11 réduisant les contraintes appliquées sur l'anneau. Dans l'exemple illustré, le profil de raccordement possède un évidement sous forme d'oeillet au niveau du raccordement du bras avec l'anneau. Cet évidemment permet une certaine élasticité au niveau de ce raccordement.

D'autres alternatives consistent à utiliser pour les bras un élément élastique. Dans cette forme de réalisation les bras ne doivent pas être tangentiels ou dans un angle de 0° à 60°. II est également possible d'utiliser des bras qui sont courbés ou d'utiliser un matériau différent pour les anneaux que pour les bras. Dans ce dernier cas, les bras sont fabriqués en un matériau ayant une élasticité plus élevée que celle des anneaux. Ainsi, par exemple, les bras seraient fabriqués en fibre de carbone et les anneaux en acier. II est également possible d'équiper les bras d'un canal interne pour permettre le graissage ou le passage de fils.

Le principe de fonctionnement du palier tournant suivant l'invention sera maintenant décrit à l'aide de la figure 7. Lorsque le tambour est mis en rotation, celui-ci tend à se dilater sous l'influence de la force centrifuge. Cette dilation entraîne à son tour une augmentation du périmètre du tambour qui induit alors une augmentation du diamètre externe du palier. Cette augmentation est maintenant compensée par le
déplacement angulaire des bras qui relient le premier anneau au deuxième. En effet, ce déplacement angulaire, représenté en lignes fines
à la figure 7 va permettre de suivre l'augmentation du diamètre du deuxième anneau 3 sans affecter le premier anneau 2. Comme illustré à
la figure 7, le deuxième anneau tourne légèrement par rapport au premier anneau. Grâce au déplacement angulaire des bras 5, le premier anneau n'est plus soumis à des forces radiales considérables induites
par la force centrifuge et les dimensions du premier anneau ne se modifient pratiquement pas. Par conséquent, le jeu au niveau de l'axe
n'est pas modifié et la fiabilité est sensiblement accrue.

## Revendications

1. Palier tournant pour un tambour d'un accumulateur d'énergie cinétique, lequel palier comporte une ouverture centrale, agencée pour recevoir un axe de rotation du tambour, **caractérisé en ce que** le palier comporte un premier et un deuxième anneaux montés de façon concentrique et à distance l'un par rapport à l'autre, ladite ouverture centrale étant située sur le premier anneau, le premier et le deuxième anneaux étant reliés entre eux à l'aide d'un jeu de bras qui s'étendent dans un espace situé entre le premier et le deuxième anneaux, chaque bras dudit jeu étant agencé pour permettre un déplacement angulaire lors d'une rotation du tambour, de telle façon à permettre un élargissement du rayon du deuxième anneau.

2. Palier suivant la revendication 1, **caractérisé en ce qu'**un évidement est chaque fois prévu entre deux bras successifs dudit jeu de bras.

3. Palier suivant la revendication 1 ou 2, **caractérisé en ce que** chaque bras dudit jeu de bras est placé tangentiellement par rapport à une circonférence du premier anneau.

4. Palier suivant la revendication 1 ou 2, **caractérisé en ce que** chaque bras dudit jeu de bras est placé sur le premier anneau de façon à former un angle situé entre 0° et 60° par rapport à la circonférence du premier anneau.

5. Palier suivant la revendication 1 ou 2, **caractérisé en ce que** chaque bras dudit jeu de bras est relié à au moins un des anneaux à l'aide d'une rotule.

6. Palier suivant la revendication 1 ou 2, **caractérisé en ce que** chaque bras dudit jeu de bras est formé par un élément élastique.

7. Palier suivant la revendication 1 ou 2, **caractérisé en ce que** chaque bras dudit jeu de bras possède au niveau de son raccordement avec l'anneau un profil réduisant les contraintes appliquées sur l'anneau.

8. Palier suivant l'une des revendications 1 à 7, **caractérisé en ce que** le deuxième anneau est composé d'un ensemble de sections pouvant coulisser l'une par rapport à l'autre.

9. Palier suivant la revendication 8, **caractérisé en ce que** chaque section est pourvue à ses extrémités d'un profil permettant d'enjamber des sections successives entre elles.

10. Palier suivant l'une des revendications 1 à 9, **caractérisé en ce que** chaque bras est dimensionné en fonction du nombre de bras que comporte le jeu et en fonction du tambour.

11. Palier suivant l'une des revendications 1 à 10, **caractérisé en ce que** les bras sont fabriqués en un matériau ayant une élasticité plus élevée que celle des anneaux.

12. Accumulateur d'énergie cinétique pourvu d'un palier tournant suivant l'une des revendications 1 à 11.
